# EUROPEAN PATENT APPLICATION

(11) **EP 3 605 299 A1**
(43) Date of publication of application: **05.02.2020**
(21) Application number: 17903894.8
(22) Date of filing: 27.10.2017
(51) Int. Cl.: G06F 3/0484, G06F 3/0488

(54) **TOUCH PANEL DEVICE, METHOD FOR DISPLAY CONTROL THEREOF, AND PROGRAM**

(30) Priority: 30.03.2017 JP 2017068598
(71) Applicant: Shimadzu Corporation, Kyoto-shi, Kyoto 604-8511 (JP)
(72) Inventor: ZUSHI, Jumpei, Kyoto-shi Kyoto 604-8511 (JP); YAMAMOTO, Yoshitake, Kyoto-shi Kyoto 604-8511 (JP); IWATA, Akihiko, Kyoto-shi Kyoto 604-8511 (JP); ISHIGAKI, Masaki, Kyoto-shi Kyoto 604-8511 (JP); YOSHIMURA, Hiroyuki, Kyoto-shi Kyoto 604-8445 (JP); SHIMOMURA, Emiko, Kyoto-shi Kyoto 604-8445 (JP)
(74) Representative: Mewburn Ellis LLP
(86) International application number: PCT/JP2017/038860
(87) International publication number: WO 2018/179552

(57) **Abstract**

In the touch panel device, when a slide operation in an oblique direction by a user is performed, out of a content displayed on the display screen 11 at that time, a region surrounded by an imaginary rectangle in which a start point Pa and an end point Pb of the slide operation are opposing corners and either one side of the imaginary rectangle is parallel to either one side of the display screen is displayed in an enlarged manner so as to fill the entirety of the predetermined region 12 of the display screen 11. With this, an intuitive display enlargement operation can be performed even for a touch panel device not supporting a multi-touch operation.

## Description

### Technical Field

The present invention relates to a touch panel device, a method for display control thereof, and a program.

### Background Art

A touch panel device is a device configured to display images, words, etc., on a screen and capable of performing an input operation into a computer when a user touches the screen with a finger or a pen, etc., and is widely used in smartphones, tablets, ATMs at banks, and ticket vending machines at train stations (see Patent Document 1). Such a touch panel device is provided with a display device composed of a liquid display (Liquid Crystal Display, LCD), etc., and a touch sensor provided on the screen of the display device to detect the position where the user touched on the screen, and is classified into a plurality of systems based on the differences in the detecting mechanism of the touch sensor.

For example, a touch panel device using a capacitive sensing method is configured to detect the input position based on the change in the electrostatic capacity due to the touch of a finger or a dedicated touch pen on the screen, and there are two types called a surface type and a projection type. Between these, in the projection type widely used in smartphones and the like in recent years, a touch sensor is provided in which two electrode layers each composed of a large number of transparent electrodes arranged in a matrix shape are arranged on a transparent substrate and a cover made of an insulator such as a glass plate is provided on the electrode layers, and the coordinate of the input position is specified due to the change in capacitance of the large number of transparent electrodes when a finger or the like is brought close to the screen.

Such a touch panel device of a projection type capacitive sensing method has characteristics that the input is detected only by lightly touching the screen and multipoint simultaneous detection can be performed (that is, a multi-touch is supported). Therefore, various input operations, such as, not only an operation (touch operation) for selecting a word, a button, or the like, displayed on the screen by touching the screen with a finger, but also an operation (slide operation) for performing scrolling of the display screen by sliding a finger on the screen and an operation (pinch out operation and pinch in operation) for zooming into or out the displayed image by moving two fingers placed on the screen away or close to each other, can be performed. On the other hand, a touch panel device of a projection type capacitive sensing method has disadvantages of having a complex structure, high manufacturing cost, inability to operate through insulation such as rubber gloves, etc., and not being suitable for use in equipment using water since adhesion of water droplets may cause a malfunction.

On the other hand, in a resistive film type (also called pressure-sensitive type) touch panel device widely used in ATMs of banks and automatic ticket vending machines in stations, etc., a touch sensor is configured such that a glass substrate and a transparent film each provided with a transparent electrode film are disposed in a manner so that the transparent electrode films face each other in a separated manner. In such a touch sensor, a voltage is applied to both ends of one transparent electrode film in the X-direction and to both ends of the other transparent electrode film in the Y-direction (or four corners of one transparent electrode), and when the surface of the transparent film is pressed by a finger or the like, the transparent electrode films come into contact with each other at the pressed position and a current flows between the two. Therefore, by detecting the voltage value in the X-direction and the voltage value in the Y-direction at this time, the coordinate of the input position can be specified.

Such resistive film type touch panel devices cannot perform multipoint simultaneous detection in principle (that is, it does not support a multi-touch). However, many touch panels for, e.g., portable analytical instruments, environmental measurement devices that perform water analysis, etc., use this method because it is simple in structure, it can be produced at a low cost, it can be operated via insulator, such as, e.g., rubber gloves, and no malfunctioning due to adhesion of water droplets occurs.

### Prior Art

### Patent Document

**Patent Document 1:** Japanese Unexamined Patent Application Publication No. 2016-126455 (see [0002]-[0005])

### SUMMARY OF THE INVENTION

### Problems to be Solved by the Invention

As described above, since the resistive film type touch panel device does not support a multi-touch, it is not possible to perform an image enlargement operation by pinching out. Alternatively, for example, there is a method in which the user numerically inputs the range to be enlarged and the magnification, but that is not an intuitive operation, and further has the disadvantage that the input operation takes time.

Note that such a problem is not limited to the pressure-sensitive type, and is common to touch panels not supporting a multi-touch (for example, touch panels of a surface type capacitive sensing method).

The present invention has been made in view of the aforementioned problems and aims to provide a touch panel device capable of performing an intuitive display enlargement operation even for a touch panel device not supporting a multi-touch.

### Means for Solving the Problems

The touch panel device according to the present invention made to solve the aforementioned problems includes:
a) a display means provided with a rectangular display screen;
b) a touch sensor configured to generate a signal indicating a touch position according to a touch by a user on the display screen;
c) a slide operation determination means configured to determine whether or not a slide operation of the touch position in an oblique direction is performed on the display screen by the user; and
d) a display enlargement means configured to control the display means so that, when the slide operation determination means determines that the slide operation in the oblique direction is performed, out of a content displayed on the display screen at that time, a range surrounded by an imaginary rectangle in which a start point and an end point of the slide operation are opposing corners and either one side of the imaginary rectangle is parallel to either one side of the display screen is displayed in an enlarged manner.

In the present invention, the touch sensor may be in the form of a transparent sheet to be attached on the display screen, or may be a touch sensor to be arranged on a peripheral portion of the display screen. Note that the slide operation of the touch position in the oblique direction means an operation in which a user touches one point on the display screen and slides the touch position in a direction not parallel to any side of the display screen while maintaining the touched state.

According to the touch panel device according to the present invention having the above configuration, an arbitrary range (specified range) on the display screen is selected and the content displayed in the specified range is displayed in an enlarged manner only by being obliquely dragged by the user with a finger or a touch pen on the display screen. Therefore, it is not necessary to specify an enlargement range by numerical inputs in a conventional manner, and a simple and intuitive display enlargement operation can be performed.

It is preferable that the touch panel device according to the present invention further include:
e) a range specification frame display means configured to control the display means so that, while the slide operation is being performed, a frame showing a rectangle in which the start point of the slide operation and a current touch position by a user are opposing corners and either one side of the rectangular is parallel to either one side of the display screen is displayed in a manner so as to be superimposed on a displayed content of the display screen at that time.

According to such a configuration, since the user can perform the slide operation while confirming the position and the size of the target region of the enlarged display by visually recognizing the rectangular frame, it is possible to perform a more intuitive operation.

In the touch panel device according to the present invention, it may be configured such that the display enlargement means is configured to control the display means so that a content displayed in a range (specified range) surrounded by the imaginary rectangle is displayed so as to fill an entirety of a previously determined region (predetermined region) on the display screen.

According to such a configuration, since the magnification is automatically determined from the ratio between the size of the specified range determined by the slide operation in the oblique direction and the size of the predetermined region, the user is not required to separately specify the magnification and can easily perform the display enlargement operation. Note that the predetermined region may be the entirety of the display screen.

Further note that the predetermined region does not always need to be rectangular. In that case, it is conceivable that the specified range is enlarged at the maximum magnification at which no portion is out of the predetermined region and the remaining portion of the predetermined region is made to a margin, or the specified range is enlarged at the minimum magnification at which there is no margin created and the portion out of the predetermined region is cut out.

Also in cases where the predetermined region is a rectangle, the aspect ratio of the predetermined region and the aspect ratio of the rectangle in the aforementioned specified range often do not match. In that case, different magnifications may be applied in the vertical direction and the horizontal direction so that the aspect ratio of the two matches, but it is more desirable to apply the same magnification in the vertical direction and the horizontal direction so that the aspect ratio does not change before and after the enlargement. In the case of enlarging while maintaining the aspect ratio, for example, a portion of the displayed content after the enlargement is cut off, or the displayed content is displayed in a manner such that margins are provided in the up-down direction or in the left-right direction of the enlarged displayed content.

Further, in the touch panel device according to the present invention, it may be configured such that the display enlargement means is configured to control the display means so that a content displayed in a range surrounded by the imaginary rectangle is displayed at a predetermined magnification or a magnification specified by the user after the slide operation.

Furthermore, the method for controlling a display of a touch panel device according to the present invention is a method for controlling a screen display of the touch panel device including a display means provided with a rectangular display screen and a touch sensor configured to generate a signal indicating a touch position in accordance with a touch by a user on the display screen. The method includes:
a) a first step of determining whether or not a slide operation of a touch position in an oblique direction by a user is performed on the display screen based on the signal; and
b) a second step of controlling the display means so that, when it is determined that the slide operation in the oblique direction is performed in the first step, out of a content displayed on the display screen at that time, a region surrounded by an imaginary rectangle in which a start point and an end point of the slide operation are opposing corners and either one side of the imaginary rectangle is parallel to either one side of the display screen is displayed in an enlarged manner.

Further, a program according to the present invention is a program for controlling a screen display of a touch panel device comprising a display means provided with a rectangular display screen and a touch sensor configured to generate a signal indicating a touch position in accordance with a touch on the display screen by a user, the program making a computer execute:
a) determination processing of determining whether or not a slide operation of a touch position in an oblique direction by a user is performed on the display screen based on the signal; and
b) display enlargement processing for controlling the display means so that, when it is determined in the determination processing that the slide operation in the oblique direction is performed, out of a content displayed on the display screen at that time, a region surrounded by an imaginary rectangle in which a start point and an end point of the slide operation are opposing corners and either one side of the imaginary rectangle is parallel to either one side of the display screen is displayed in an enlarged manner.

### [Effects of the Invention]

As explained above, according to the touch panel device, the method for display control thereof, and the program according to the present invention, it is possible to perform an intuitive display enlargement operation even for a touch panel device not supporting a multi-touch.

### BRIEF DESCRIPTION OF THE DRAWINGS

FIG. 1 is a block diagram showing a main part configuration of a touch panel device according to one embodiment of the present invention.
FIG. 2 is a flowchart showing an operation when a slide operation in an oblique direction is performed on a touch panel device.
FIG. 3 is a diagram showing a screen display before enlargement.
FIG. 4 is a diagram for explaining a slide operation by a user and the screen display during the operation.
FIG. 5 is a diagram showing the screen display after enlargement.

### EMBODIMENTS FOR CARRYING OUT THE INVENTION

Hereinafter, embodiments for carrying out the present invention will be explained with reference to examples.

### [Embodiment]

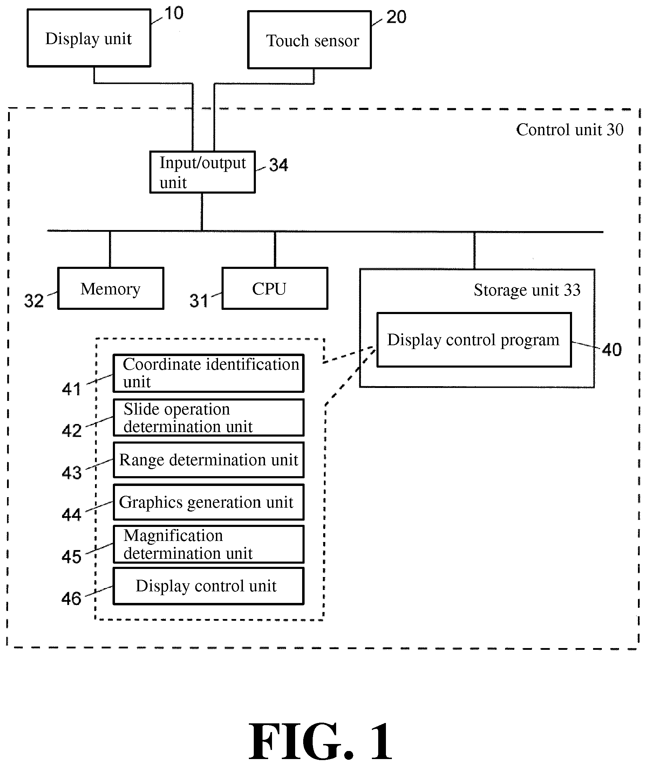

FIG. 1 is a block diagram showing a main part configuration of a touch panel device according to one embodiment of the present invention. The touch panel device according to this embodiment is provided with a display unit 10 having a rectangular display screen composed of a known display device, such as, e.g., a LCD, a resistive film type touch sensor 20 arranged so as to cover the entire region of the screen of the display unit 10, and a control unit 30 for controlling them.

The control unit 30 is essentially a computer, and is provided with a CPU (Central Processing Unit) 31, which is a central processing unit, a memory 32 composed of a RAM (Random Access Memory), a storage unit 33 composed of a non-volatile storage device, such as, e.g., an HDD (Hard Disc Drive), an SSD (Solid State Drive), a ROM (Read Only Memory), and a flash memory, and an input/output unit 34 for communicating with an external device.

In the storage unit 33, a display control program 40 (corresponding to the program according to the present invention) is stored. Note that the display control program is not always required to be a single program, and may be a function partially incorporated in a program for controlling the display unit 10 and the touch sensor 20, for example, and the form thereof is not particularly limited.

As illustrated in FIG. 1, the display control program 40 includes a coordinate identification unit 41, a slide operation determination unit 42, a range determination unit 43, a graphics generation unit 44, a magnification determination unit 45, and a display control unit 46. These are all functional blocks realized as software by reading out the display control program 40 to the memory 32 and executing it by the CPU 31.

The coordinate identification unit 41 obtains an input signal detected by the touch sensor 20 via the input/output unit 34, and based on the input signal, specifies the coordinate of the position at which the user's touch operation is performed on the screen of the display unit 10. The slide operation determination unit 42 determines whether or not a slide operation in the oblique direction is performed by a user based on the temporal change of the coordinate specified by the coordinate identification unit 41. The range determination unit 43 determines the specified range by the user from the start point of the slide operation and the current touch position. The graphics generation unit 44 generates graphics showing the specified range. The magnification determination unit 45 determines the magnification based on the size, etc., of the specified range. The display control unit 46, by sending a control signal to the display unit 10 via an input/output unit 34, displays graphics generated in the graphics generation unit 44 on the screen of the display unit 10, or displays the range indicated by the slide operation in an enlarged manner. Note that the range determination unit 43, the magnification determination unit 45, and the display control unit 46 collaboratively function as the display enlargement means in the present invention and that the range determination unit 43, the graphics generation unit 44, and the display control unit 46 collaboratively function as the range specification frame display means in the present invention.

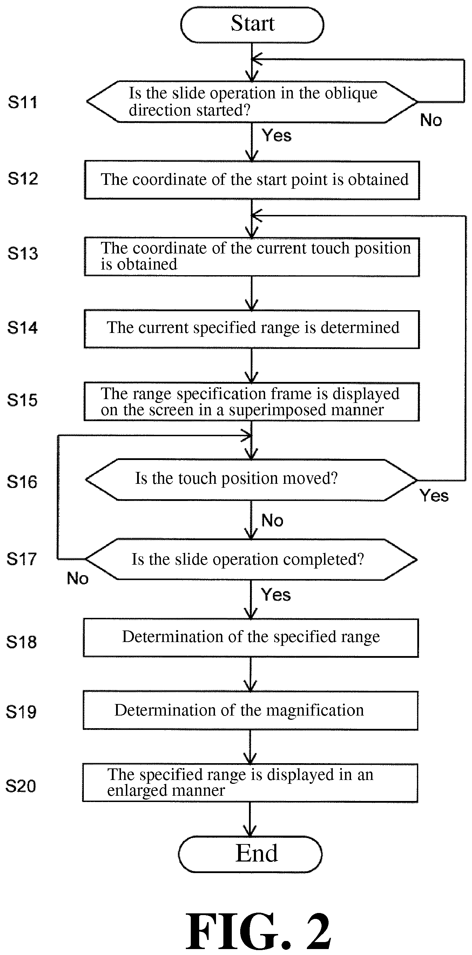

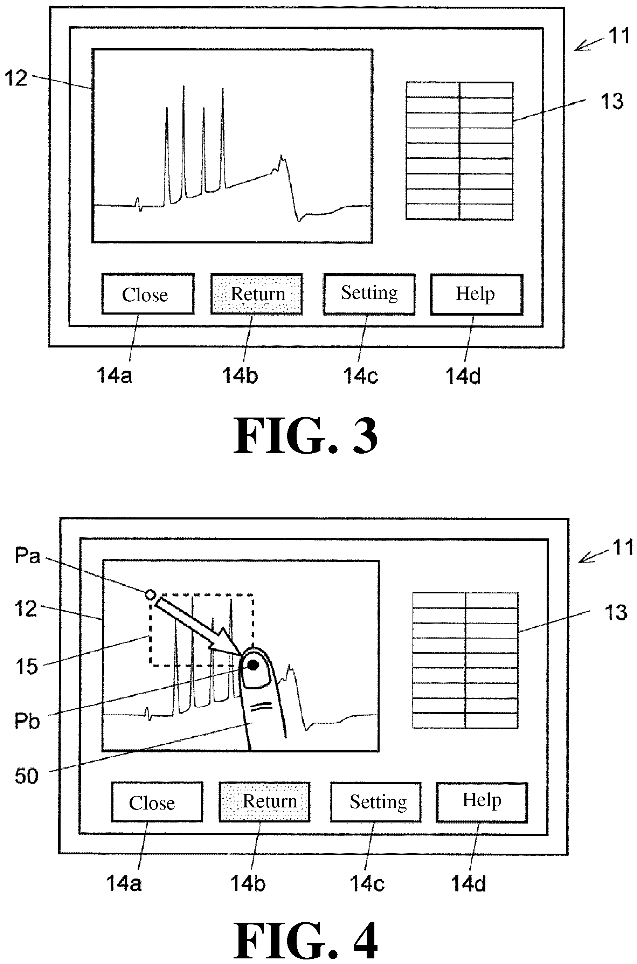

Hereinafter, the execution procedure of the enlargement display in the touch panel device according to this embodiment will be explained with reference to FIG. 2 to FIG. 5. FIG. 2 is a flowchart showing an execution procedure for the enlargement display. FIG. 3 to FIG. 5 are diagrams showing examples of the screen display by the display unit 10. Note that the touch sensor 20 is arranged so as to be superimposed on the screen 11 of the display unit 10, but the touch sensor 20 is not illustrated in FIG. 3 to FIG. 5 since it is transparent.

FIG. 3 shows an example of the screen display before a slide operation by a user is performed (this is called the "initial state"). In this screen display, a graph display region 12 that shows data groups which are display targets in a graph format, a table display region 13 that shows the data group in a table format, and a plurality of GUI buttons 14a to 14d are displayed. Among the GUI buttons 14a to 14d, when a user touches the button 14a on which "Close" is displayed, the current screen display is closed and the screen displayed immediately before that will be displayed. Also, when the user touches the button 14c on which "Setting" is displayed, a setting screen for receiving various settings from the user is displayed, and when the user touches the button 14d on which "Help" is displayed, a help screen is displayed. Note that the button 14b on which "Return" is displayed is not valid at this point.

In the initial state, on the graph display region 12, a graph showing the data group which is a display target is displayed in a size in which the entirety thereof is easily viewable. When the user touches the screen 11 in this state, a signal indicating the touch position is sent from the touch sensor 20 to the control unit 30, and the coordinate of the touch position of the user on the screen 11 is specified by the coordinate identification unit 41 based on the signal. Note that, here, the XY-coordinate with the upper left of the screen 11 as the origin is set, and when the user slides a finger in the oblique direction on the screen 11 while maintaining the touch state, both the X-coordinate and the Y-coordinate specified in the coordinate identification unit 41 change from moment to moment. The slide operation determination unit 42 observes the coordinate specified in the coordinate identification unit 41 and determines that a slide operation in an oblique direction has started when such a temporal change of the coordinates occurs (Yes in Step S11).

Then, the range determination unit 43 obtains the start point coordinate of the slide operation from the coordinate identification unit 41 and the coordinate of the current touch position (Steps S12, S13), and determines the range surrounded by an imaginary rectangle in which the two coordinate positions on the screen of the display unit 10 are opposing corners and either one side of the imaginary rectangle is parallel to either one side of the display screen is the current specified range (Step S14).

Subsequently, the graphics generation unit 44 generates a rectangular frame-like graphic showing the specified range, and the display control unit 46 controls the display unit 10 so that the graphic of this frame (hereinafter referred to as "range specification frame 15") is displayed on the current screen display in a superimposed manner (Step S15, FIG. 4). At this time, the upper left vertex of the range specification frame 15 matches the start point Pa of the slide operation, and the lower right vertex of the range specification frame 15 matches the current touch position Pb. Note that the white circle showing the start point Pa, the black circle showing the current touch position, and the white arrow showing the slide operation direction in FIG. 4 are shown for description, and are not displayed on the actual screen.

After that, every time the touch position on the screen 11 moves (Step S16), the processing of Steps S13 to S15 is repeated. With this, the range specification frame 15 displayed on the screen 11 is sequentially updated.

After that, when the user removes the finger from the touch sensor, the slide operation determination unit 42 determines that the slide operation is completed (Step S17), and the specified range at that time, that is, the range surrounded by a rectangle in which the start point Pa and the end point of the slide operation are opposing corners and either one side of the rectangle is parallel to either one side of the display screen is determined as the final specified range (Step S18).

Next, the magnification determination unit 45, based on the size of the graph display region 12 and the size of the specified range determined in Step S18, determines the magnification necessary to display the display content included in the specified range to fill the entirety of the graph display region 12 in an enlarged manner (Step S19). Here, when the aspect ratio of the specified range does not match the aspect ratio of the graph display region 12 match, the determination of magnification in Step S19 may be performed after automatically expanding the specified range determined in Step S18 in the vertical direction or the horizontal direction so that the ratios match. Alternatively, different magnifications may be determined in the vertical direction and the horizontal direction so that the size of the specified range after the enlargement is the same as the size of the graph display region 12. Furthermore, the maximum magnification (referred to as the "first magnification") may be determined in a range in which the aspect ratio is maintained and there is no portion that extends off the graph display region 12, or the minimum magnification (referred to as the "second magnification") may be determined in a range in which the aspect ratio is maintained and no margin is created (Step S20).

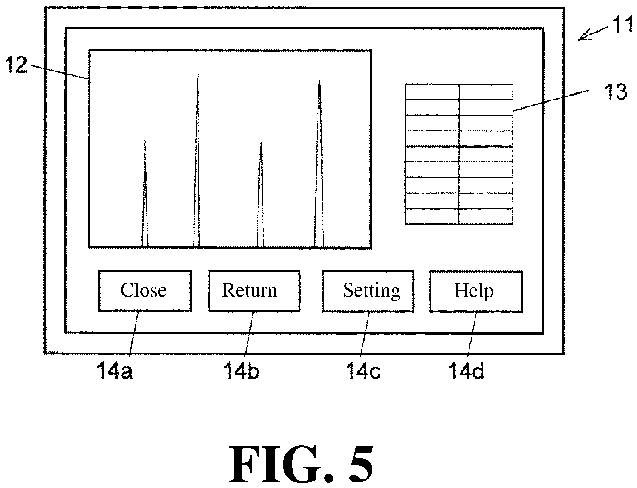

In this way, when the magnification is determined, the display control unit 46 controls the display unit 10 so that the display content included in the specified range is enlarged at the magnification and displayed on the graph display region 12 (Step S20). With this, as shown in FIG. 5, the specified range specified by the user (that is, the range surrounded by the range specification frame 15 in FIG. 4) by the slide operation is displayed so as to be enlarged in the entire graph display region 12. Note that, in Step S20, when the magnification is set to the first magnification, since the size after the enlargement becomes smaller than the size of the graph display region 12, margins (region without images) are created above and below, or on the left and right sides of the image enlarged and displayed in the graph display region. Furthermore, in Step S20, when the magnification is set to the second magnification, since the size after the enlargement becomes larger than the graph display region 12, a portion of the image after enlargement in the up-down direction or the left-right directions is cut off.

When the enlargement display is performed in this manner, the GUI button 14b in which "Return" is displayed becomes effective (FIG. 5), and the user can touch the GUI button 14b with a finger or the like to cancel the enlarged display to return to the initial state (FIG. 3). Also, instead of providing such a GUI button 14b, it may be configured to return to the initial state by double tapping the screen 11 (tapping twice within a predetermined time). Alternatively, it may be configured to return to the initial state by performing a slide operation from the lower right to the upper left of the screen 11, conversely to the enlargement.

Although embodiments for carrying out the present invention are described with reference to examples, the present invention is not limited to the above examples, and various modification can be made within the scope of the present invention. For example, in the above example, the specified range specified by the slide operation is enlarged to fill up the region of the screen 11 (the graph display region 12 in the above example), but it may be enlarged and displayed to fill up the entire region of the screen 11. Further, in the above example, the specified range specified by the slide operation is enlarged and displayed by the magnification required by the size of the specified range and the size of the predetermined region on the display screen (the graph display region 12 in the above example), but it may be enlarged and displayed by a predetermined magnification. Furthermore, the magnification may be specified by the user after completion of the slide operation and it may be displayed at the magnification.

It also may be configured such that in addition to the enlargement of an image, the reduction of an image is specified by a slide operation. In this case, for example, when the user performs a slide operation from the upper left to the lower right, the display may be enlarged, and when the user performs a slide operation from the lower right to the upper left, the display may be reduced. In this way, even when a reduction display is performed by a slide operation, a range surrounded by an imaginary rectangle in which the start point and the end point of the slide operation are opposing corners and either one side of the imaginary rectangle is either side of the display screen is the specified range, and the reduction of the display is performed at a reduction rate calculated from the size of the specified range and the predetermined region on the screen, or a predetermined reduction rate (or a reduction rate specified by the user after the slide operation).

Furthermore, in the above example, the touch sensor 20 is a resistive film type, but the touch sensor type in the present invention is not limited to this, and for example, various touch sensors that do not support a multi-touch, such as, e.g., a touch sensor of a surface type capacitive couple method, can be suitably used as a touch sensor in the present invention.

In addition, the touch panel device according to the present invention can be suitably applied to, for example, an analysis device in which an analysis part that performs a sample analysis and an environmental analysis and a touch panel device that display the analysis result by the analysis part and receives an input from the user are integrally provided, such as, e.g., a liquid chromatograph, a gas chromatograph, a water quality analysis device, and a dust measuring device.

### Description of Reference Symbols

- 10:: display unit
- 11:: screen
- 12:: graph display region
- 13:: table display region
- 14a to 14d:: GUI button
- 15:: Range specification frame
- 20:: touch sensor
- 30:: control unit
- 31:: CPU
- 32:: memory
- 33:: storage unit
- 34:: input/ output unit
- 40:: display control program
- 41:: coordinate identification unit
- 42:: slide operation determination unit
- 43:: range determination unit
- 44:: graphics generation unit
- 45:: magnification determination unit
- 46:: display control unit

## Claims

1. A touch panel device comprising:
a) a display means provided with a rectangular display screen;
b) a touch sensor configured to generate a signal indicating a touch position according to a touch by a user on the display screen;
c) a slide operation determination means configured to determine whether or not a slide operation of the touch position in an oblique direction is performed on the display screen by the user; and
d) a display enlargement means configured to control the display means so that, when the slide operation determination means determines that the slide operation in the oblique direction is performed, out of a content displayed on the display screen at that time, a range surrounded by an imaginary rectangle in which a start point and an end point of the slide operation are opposing corners and either one side of the imaginary rectangle is parallel to either one side of the display screen is displayed in an enlarged manner.

2. The touch panel device as recited in claim 1, further comprising:
e) a range specification frame display means configured to control the display means so that, while the slide operation is being performed, a frame showing a rectangle in which the start point of the slide operation and a current touch position by a user are opposing corners and either one side of the rectangular is parallel to either one side of the display screen is displayed in a manner so as to be superimposed on a displayed content of the display screen at that time.

3. The touch panel device as recited in claim 1,
wherein the display enlargement means is configured to control the display means so that a content displayed in a range surrounded by the imaginary rectangle is displayed so as to fill an entirety of a previously determined region on the display screen.

4. The touch panel device as recited in claim 1,
wherein the display enlargement means is configured to control the display means so that the content displayed in a range surrounded by the imaginary rectangle is displayed at a predetermined magnification or a magnification specified by the user after the slide operation.

5. A method for controlling a screen display of the touch panel device including a display means provided with a rectangular display screen and a touch sensor configured to generate a signal indicating a touch position in accordance with a touch by a user on the display screen, the method comprising:
a) a first step of determining whether or not a slide operation of a touch position in an oblique direction by a user is performed on the display screen based on the signal; and
b) a second step of controlling the display means so that, when it is determined that the slide operation in the oblique direction is performed in the first step, out of a content displayed on the display screen at that time, a region surrounded by an imaginary rectangle in which a start point and an end point of the slide operation are opposing corners and either one side of the imaginary rectangle is parallel to either one side of the display screen is displayed in an enlarged manner.

6. A program for controlling a screen display of a touch panel device comprising a display means provided with a rectangular display screen and a touch sensor configured to generate a signal indicating a touch position in accordance with a touch on the display screen by a user, the program making a computer execute:
a) determination processing of determining whether or not a slide operation of a touch position in an oblique direction by a user is performed on the display screen based on the signal; and
b) display enlargement processing for controlling the display means so that, when it is determined in the determination processing that the slide operation in the oblique direction is performed, out of a content displayed on the display screen at that time, a region surrounded by an imaginary rectangle in which a start point and an end point of the slide operation are opposing corners and either one side of the imaginary rectangle is parallel to either one side of the display screen is displayed in an enlarged manner.
